# EUROPÄISCHE PATENTSCHRIFT

(11) **EP 3 181 754 B1**
(45) Veröffentlichungstag und Bekanntmachung des Hinweises auf die Patenterteilung: **07.08.2019**
(21) Anmeldenummer: 16195791.5
(22) Anmeldetag: 26.10.2016
(51) Int. Cl.: E01C 19/27

(54) **BODENVERDICHTUNGSGERÄT**
SOIL COMPACTION MACHINE
MACHINE DE COMPACTAGE DU SOL

(30) Priorität: 18.12.2015 DE 102015225908; 29.03.2016 DE 102016205116
(43) Veröffentlichungstag der Anmeldung: 21.06.2017
(73) Patentinhaber: Hamm AG, 95643 Tirschenreuth (DE)
(72) Erfinder: Mahler, Gerhard, 92670 Windischeschenbach (DE); Kreger, Marco, 95643 Tirschenreuth (DE); Römer, Axel, 95643 Tirschenreuth (DE)
(74) Vertreter: dompatent von Kreisler Selting Werner - Partnerschaft von Patent- und Rechtsanwälten mbB

(56) Entgegenhaltungen:
- DE-C1- 19 634 897
- US-A- 3 229 602
- José Erlin Ibañez Moncada: "HAMM GRW 280", youtube, 1. April 2014 (2014-04-01), Seite 1 pp., XP054977339, Gefunden im Internet: URL:https://www.youtube.com/watch?v=4noQ1c exXkM [gefunden am 2017-05-10]

## Beschreibung

Die Erfindung betrifft ein Bodenverdichtungsgerät nach dem Oberbegriff des Anspruchs 1.

Derartige Bodenverdichtungsgeräte sind beispielsweise aus der CZ 296132 B6 bekannt. Ein derartiges Bodenverdichtungsgerät weist in der Ausgestaltung als Gummiradwalze mindestens eine Achse auf, in der mehrere Gummiräder, vorzugsweise paarweise nebeneinander angeordnet sind. Besonders bevorzugt ist eine Anordnung von mindestens zwei Walzräderpaaren, die jeweils einen gemeinsamen Radträger für die Achsen von zwei Walzrädern aufweisen. Die Achsen des Walzräderpaares sind koaxial zueinander.

Aus DE 19634897 C1 ist eine Radaufhängung für Fahrzeuge mit in Doppelradanordnung nebeneinander liegenden Rädern bekannt, bei der eine Schwingenführung für die Räder vorgesehen ist.

Die bekannte Gummiradwalze weist für jedes Walzenräderpaar eine in Lenkrichtung lenkbare Radaufhängung mit einem höhenverstellbaren Radträger auf, in dem die Achsen für das Walzräderpaar quer zur Lenkrichtung verlaufen.

Die Höhenanpassung eines Walzräderpaares erfolgt mit Hilfe einer Hubeinrichtung aus einer Kolben-Zylindereinheit, wobei vorzugsweise die Zylinderkammer der Kolben-Zylindereinheit von benachbarten Radaufhängungen derart miteinander verbunden sind, dass die Anhebung eines Walzenradpaares zu einer Absenkung des benachbarten Walzenradpaares führt. Hierzu sind jeweils mindestens zwei Walzräderpaare hydraulisch miteinander gekoppelt. Mindestens zwei benachbarte Walzräderpaare sind über Lenkstangen miteinander gekoppelt und können demzufolge gemeinsam gelenkt werden.

Der Radträger ist um einen Drehzapfen an der Radaufhängung um einen geringen Winkelbetrag schwenkbar, so dass eine Pendelbewegung des Radträgers ermöglicht wird.

Bei einer Gummiradwalze des Typs HAMM GRW 280 ist bereits eine Radaufhängung mit einem Lenkarm und einem höhenverstellbaren Radträger bekannt, der sich auf einer Schwinge abstützt, die mit Hilfe einer an einem Ende der Schwinge angelenkten Kolben-Zylindereinheit zur Höheneinstellung schwenkbar ist. An dem der Kolben-Zylindereinheit gegenüberliegenden Ende der Schwinge ist die Schwinge über ein einachsiges Gelenk mit dem Lenkarm der Radaufhängung verbunden.

Dadurch, dass der Radträger zwischen der Schwinge und dem Lenkarm aufgenommen wird, ist die Bauhöhe der Radaufhängung relativ hoch. Das Gelenk der Schwinge an dem Lenkarm ist aufgrund der Lenkbewegung in hohem Maße belastet und das Abstützen des Radträgers auf der Schwinge verlangt eine aufwändige teure Konstruktion.

Der Erfindung liegt daher die Aufgabe zugrunde, ein Bodenverdichtungsgerät zu schaffen, die eine höhere mechanische Belastbarkeit und eine kompaktere und kostengünstigere Herstellung ermöglicht.

Zur Lösung dieser Aufgabe dienen die Merkmale des Anspruchs 1.

Die Erfindung sieht vor, dass der Radträger in der Schwinge integriert ist und das Walzräderpaar in der Schwinge gelagert ist, wobei die Schwinge kardanisch oder sphärisch in dem Lenkarm der Radaufhängung gelagert ist.

Dadurch, dass die Schwinge und der Radträger nunmehr zu einem Bauteil kombiniert sind, lässt sich die Bauhöhe der Radaufhängung reduzieren. Da die Anzahl der Bauteile reduziert ist und die Radaufhängung kompakter ausgeführt ist, sind die Herstellkosten reduziert.

Vorzugsweise ist vorgesehen, dass mit Abstand von dem sphärischen oder kardanischen Gelenk der Lenkarm mit der Schwinge in einer orthogonal zur Lenkrichtung und zur Lenkachse verlaufenden Richtung kraftschlüssig mit der Schwinge gekoppelt ist, wobei die Schwinge in Höhenrichtung und in Pendelrichtung beweglich bleibt. Die kardanische oder sphärische Lagerung der Schwinge in dem Lenkarm der Radaufhängung ermöglicht darüber hinaus in Verbindung mit der kraftschlüssigen Kopplung des Lenkarms mit der Schwinge quer zur Lenkrichtung eine höhere mechanische Belastbarkeit der Radaufhängung, da die beim Lenken auftretenden Kräfte besser in den Radträger eingeleitet werden können. Vorzugsweise ist vorgesehen, dass die Schwinge mindestens zwei Anschlagflächen aufweist, die zur Begrenzung einer auf den Radträger einwirkenden Pendelbewegung gegen den Lenkarm der Radaufhängung anschlagen. Auf diese Weise wird die Pendelbewegung des Radträgers auf einen gewünschten maximalen Winkelbereich beschränkt.

Dabei kann vorgesehen sein, dass zur Anlage der Anschlagflächen gegen den Lenkarm ein entsprechend der Schwenkbewegung der Schwinge in Höhenrichtung gebogener Steg von dem Lenkarm absteht oder dass ein Steg von der Schwinge absteht, der in eine korrespondierende gebogene Nut des Lenkarms der Radaufhängung eingreift.

Vorzugsweise ist vorgesehen, dass in der Nähe des kardanischen oder sphärischen Gelenkes zwischen Lenkarm und Schwinge ein eine Schwenkbewegung der Schwinge in Höhenrichtung zulassender Vorsprung an dem Lenkarm befestigt ist, der die Lenkkräfte des Lenkarms auf die Schwinge überträgt. Der vorzugsweise in der Nähe des kardanischen oder sphärischen Gelenkes von dem Lenkarm in Richtung auf die Schwinge vorstehende Vorsprung ist quer zur Lenkrichtung kraftschlüssig mit der Schwinge gekoppelt, so dass die Lenkkräfte des Lenkarms auf die Schwinge unmittelbar übertragen werden können. Gleichzeitig kann die Schwinge in Höhenrichtung relativ zu dem Vorsprung gleitend bewegt werden. Die kraftschlüssige Kopplung besteht daher nur quer zur Lenkrichtung in einer im Wesentlichen bodenparallelen Ebene.

Hierzu kann der Vorsprung gelenkig an dem Lenkarm befestigt sein und infolgedessen der Pendelbewegung der Schwinge folgen.

Hierzu kann der Vorsprung seitliche Flanken aufweisen, die an Gleitflächen der Schwinge anliegen, wobei bei einer Änderung der Höheneinstellung die Schwinge mit den Gleitflächen relativ zu dem Vorsprung auf- und abbewegbar ist.

Hierzu kann die Schwinge auf der dem Lenkarm zugewandten Seite gabelförmig mit zwei zueinander parallelen Seitenwänden ausgestaltet sein, die den Lenkarm an dem sphärischen oder kardanischen Gelenk beidseitig umschließen. Aufgrund des kardanischen Gelenkes kann die Schwinge sowohl durch Anheben oder Absenken des dem Lenkarm gegenüberliegenden Ende angehoben oder abgesenkt werden, wobei das kardanische Gelenk gleichzeitig die Pendelbewegung des als Schwinge ausgestalteten Radträgers zulässt. Der gelenkig gelagerte Vorsprung kann dabei zwischen den Seitenwänden der Schwinge angeordnet sein und sich auf Gleitflächen an den Innenseiten der Seitenwände abstützen, um die in Querrichtung zur Lenkrichtung aufzubringenden Lenkkräfte auf die Schwinge zu übertragen.

Mehrere Walzräderpaare können koordiniert gemeinsam lenkbar sein. Hierzu kann die Radaufhängung über einen Lenkhebel mit einem benachbarten Walzräderpaar gekoppelt sein.

Insbesondere ist die Radaufhängung mit einer Lenkeinrichtung gekoppelt, mit der mehrere Walzräderpaare gemeinsam lenkbar sind.

Die Hubeinrichtung der Radaufhängung eines Walzräderpaares kann eine Kolben-Zylindereinheit mit einer Zylinderkammer aufweisen, die mit einer Zylinderkammer einer Hubeinrichtung eines benachbarten Walzräderpaares verbunden ist, derart, dass eine wechselseitige Anhebung eines Walzräderpaares zu einer wechselseitigen Absenkung eines benachbarten Walzräderpaares führt.

Dies führt dazu, dass der Maschinenrahmen des Bodenverdichtungsgerätes auch bei unebener Bodenkontur im Wesentlichen horizontal gehalten werden kann. Die Radaufhängung und/oder der Radträger bestehen vorzugsweise aus Gussmaterial.

Das freie dem Lenkarm gegenüberliegende Ende der Schwinge kann ein Anschlussteil aufweisen, das gelenkig mit der Hubeinrichtung gekoppelt ist. Dabei kann die gelenkige Ankopplung ebenfalls kardanisch ausgeführt sein.

Im Folgenden werden unter Bezugnahme auf die Zeichnungen Ausführungsbeispiele der Erfindung näher erläutert.

Es zeigen:
- Fig. 1: ein Bodenverdichtungsgerät in der Ausgestaltung als Gummiradwalze,
- Fig. 2: die Radaufhängung in einer Explosionszeichnung,
- Fig. 3.: die Radaufhängung in einer Zusammenstellungszeichnung, und
- Fig. 4: eine kinematische Prinzipzeichnung.

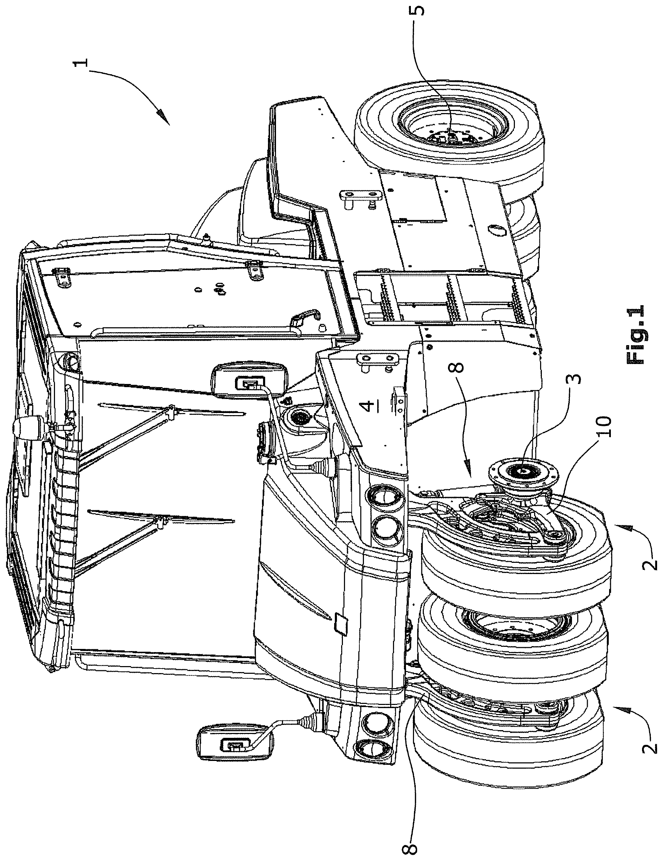

Fig. 1 zeigt ein Bodenverdichtungsgerät in der Ausgestaltung einer Gummiradwalze 1 mit einem Maschinenrahmen 4 mit einer Vorderachse 3 und einer Hinterachse 5. Zumindest die Vorderachse 3 hat mehrere Walzräderpaare 2, die jeweils mittels einer Radaufhängung 8 lenkbar in dem Maschinenrahmen 4 gelagert sind. Die Radaufhängung 8 weist einen höhenverstellbaren Radträger 10 auf, der in Fig. 1 auf der rechten Seite abgebildet ist. Bei diesem Walzräderpaar 2 ist ein Rad in der Darstellung entfernt, um die Radaufhängung 8, die die Verbindung zwischen Maschinenrahmen 4 und den Walzräderpaaren 2 bildet, sichtbar zu machen.

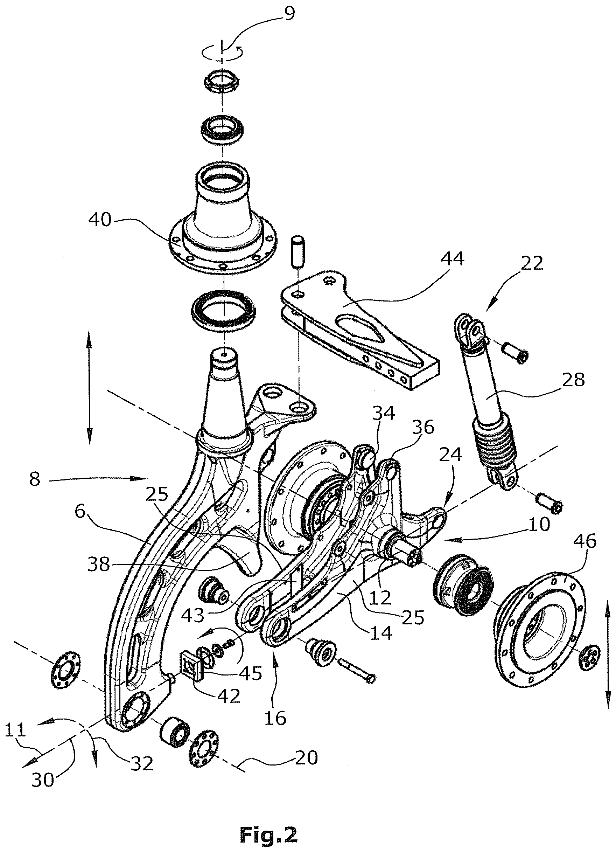

Die Radaufhängung 8 für ein Walzräderpaar 2 ist in Fig. 2 in einer Explosionszeichnung dargestellt.

Die Radaufhängung 8 weist einen in Lenkrichtung 11 um eine orthogonal zu dem Maschinenrahmen 4 bei horizontalem Maschinenrahmen 4 vertikal verlaufende Lenkachse 9 schwenkbaren, im Maschinenrahmen 4 gelagerten Lenkarm 6, einen Radträger 10 zur Aufnahme eines Walzräderpaares 2 und eine Hubeinrichtung 28 auf, mit der der Radträger 10 in Form einer Schwinge 14 zur Höhenverstellung um eine Schwenkachse 20 schwenkbar in dem Lenkarm 6 der Radaufhängung 8 gelagert ist.

Die Schwenkachse 20 für die Schwinge 14 in Höhenrichtung verläuft parallel zum Maschinenrahmen 4 und orthogonal zur Lenkrichtung 11 des Lenkarms 6.

Der Lenkarm 6 ist ähnlich einem Viertelkreis in Lenkrichtung 11 vorstehend gebogen. An dessen unterem Ende ist ein kardanisches oder sphärisches Gelenk 16 angeordnet ist, das den Lenkarm 6 mit dem als Schwinge 14 gestalteten Radträger 10 koppelt und sowohl eine Schwenkbewegung des Radträgers 10 um die Schwenkachse 20 als auch eine Pendelbewegung 32 um eine Pendelachse 30 zulässt.

An dem dem Gelenk 16 gegenüberliegenden Ende der Schwinge 14 ist ein Gelenk 24 zur gelenkigen Ankopplung an das untere Ende einer Kolben-Zylindereinheit der Hubeinrichtung 28 angeordnet. Das andere Ende der Kolben-Zylindereinheit ist an dem oberen Ende des Lenkarms 6 der Radaufhängung 8 über ein Gelenk 22 angekoppelt.

Das untere Gelenk 24 zwischen der Kolben-Zylindereinheit und der Schwinge 14 kann auch kardanisch ausgeführt sein.

Der Radträger 10 der in Lenkrichtung lenkbaren Radaufhängung 8 weist quer zur Lenkrichtung 11 verlaufende Radachsen 12 für das Walzräderpaar 2 auf und ist als Schwinge 14 gestaltet, deren Schwenkposition von der Hubeinrichtung 28 bestimmt wird. Die Radachsen 12 sind innerhalb der Schwinge 14 derart angeordnet, dass sie in der Nähe der Lenkachse 9 verlaufen und diese kreuzen oder nahezu kreuzen.

Die Schwinge 14 ist in Richtung auf das kardanische oder sphärische Gelenk 16 gabelförmig in zwei zueinander beabstandeten Seitenwänden 25 aufgeteilt, so dass die Seitenwände 25 den Lenkarm 6 im Bereich des Gelenkes 16 zwischen sich aufnehmen. Das Gelenk 16 hat mindestens zwei Freiheitsgrade, so dass die Schwinge 14 um die Schwenkachse 20 und um die Pendelachse 30 schwenkbar ist. Die vorzugsweise zueinander parallelen Seitenwände 25 sind nach oben bis in den Bereich oberhalb der Radachsen 12 fortgeführt und weisen an den Innenflächen Anschlagflächen 34, 36 auf, die mit einem radial nach unten abstehenden Steg 38 des Lenkarms 6 zusammenwirken. Die Anschlagflächen 34, 36 begrenzen eine Pendelbewegung 32 des als Schwinge 14 gestalteten Radträgers 10 um die durch das kardanische oder sphärische Gelenk 16 verlaufende Pendelachse 30, wobei je nach Pendelrichtung entweder die Anschlagfläche 34 oder die Anschlagfläche 36 an dem radial von dem bogenförmigen Lenkarm 9 vorstehenden Steg 38 anliegen kann.

Die Pendelachse 30 verläuft orthogonal zur Schwenkachse 20 und parallel zur Schwinge 14, sowie orthogonal zu den Radachsen 12.

Der Steg 38 ist bogenförmig unter dem Lenkarm 6, vorzugsweise in der Mittelebene des Lenkarms 6, angeordnet und erstreckt sich in Umfangsrichtung zumindest in einem Winkelbereich, der dem maximalen Schwenkwinkelbereich zur Höhenverstellung der Schwinge 14 um die Schwenkachse 20 des Gelenkes 16 entspricht.

Es versteht sich, dass auch eine kinematische Umkehrung der Anordnung der Anschlagfläche 34 und des Stegs 38 möglich ist, indem z.B. an der Schwinge 14 ein einziger Vorsprung vorgesehen ist, der in eine anstelle des Steges 38 vorgesehene in den Zeichnungen nicht dargestellte Nut des Lenkarms 6 eingreift.

Die Nut ist dabei im Verhältnis zu dem Vorsprung so breit, dass eine vorgegebene maximale Pendelbewegung der Schwinge 14 begrenzt wird.

Ebenfalls ist eine kinematische Umkehrung bei der Lagerung der Schwinge 14 in dem Lenkarm 6 dadurch möglich, dass eine Umkehrung der gabelförmigen Gestaltung des unteren Endes des Lenkarms 6 und des dem Lenkarm 6 zugewandten Endes vorgesehen wird.

Nach einer weiteren Alternative oder zusätzlich können Schwenkwinkelbegrenzungen um die Pendelachse 30 auch an anderer Stelle, z.B. in der Nähe des kardanischen Gelenkes 16 vorgesehen sein.

In der Nähe des kardanischen Gelenkes 16 ist vorzugweise ein Vorsprung 42 an dem Lenkarm 6 befestigt, der zwischen die Seitenwände 25 der Schwinge 14 eingreift und mit Gleitflächen 43 an den Innenseiten der Seitenwände 25 in Kontakt ist. Der Vorsprung 42 kann seinerseits gelenkig an einem in Richtung auf die Schwinge 14 abstehenden Teil des Lenkarms 6 befestigt sein, so dass der Vorsprung 42 einer Pendelbewegung der Schwinge 14 auf der Innenseite der Seitenwände 25 anliegend folgen kann und seitlich vollflächig an den Gleitflächen 43 anliegt. Beispielsweise kann die gelenkige Befestigung des Vorsprungs auch sphärisch sein. Der Vorsprung 42 dient zur Entlastung des kardanischen bzw. sphärischen Gelenkes 16 im Falle von Lenkbewegungen des Lenkarms 6, indem die durch eine Lenkbewegung des Lenkarms 6 entstehenden Kräfte nicht nur durch das kardanische oder sphärische Gelenk 16 übertragen werden müssen, sondern überwiegend von dem Vorsprung 42 auf die Schwinge 14 übertragen werden. Auf diese Weise wird die Standfestigkeit der Radaufhängung 8 erhöht.

Bei einer Hubbewegung der Schwinge 14 können die seitlichen Flanken des Vorsprungs 42 auf den Gleitflächen 43 gleiten.
Die Radaufhängung kann hinsichtlich des Lenkarms 6 und des Radträgers 10 aus Gussmaterial in Leichtbauweise hergestellt werden, so dass nicht nur die Bauhöhe der Radaufhängung 8 aufgrund der Integration des Radträgers 10 in die Schwinge 14 verringert werden kann, sondern auch das Gewicht der Radaufhängung 8. Dies reduziert die bei der Lenkung auftretenden Belastungen der Lagerungen, wobei auch insbesondere das die Schwinge 14 mit dem Lenkarm 6 verbindende Gelenk 16 aufgrund seiner kardanischen oder sphärischen Gestaltung in Verbindung mit dem Vorsprung 42 die Belastung der Lagerung bei Lenkbewegungen und Pendelbewegungen entlastet.

Die Radaufhängung 8 ist am oberen Ende des Lenkarms 6 über einen Lenkhebel 44 mit einer nicht dargestellten Lenkeinrichtung gekoppelt, mit der mehrere benachbarte Walzräderpaare 2 gemeinsam um die jeweilige Lenkachse 9 in Lenkrichtung 11 lenkbar sind. Die Radaufhängung 8 ist über einen Anschlussflansch 40 am Maschinenrahmen 4 um die Lenkachse schwenkbar befestigt.

Die Hubeinrichtung 28 der Radaufhängung 8 kann eine Zylinderkammer aufweisen, die mit einer Zylinderkammer der Kolben-Zylindereinheit eines benachbarten Walzräderpaares 2 hydraulisch verbunden ist. Die hydraulische Kopplung der Kolben-Zylindereinheiten 28 benachbarter Walzräderpaare 2 hat zur Folge, dass die Anhebung eines Walzräderpaares 2 die Absenkung eines benachbarten Walzräderpaares 2 und umgekehrt zur Folge hat, so dass Bodenunebenheiten in einem bestimmten Umfang ausgeglichen werden können, ohne dass es zu einer Schräglage des Maschinenrahmens 4 kommt.

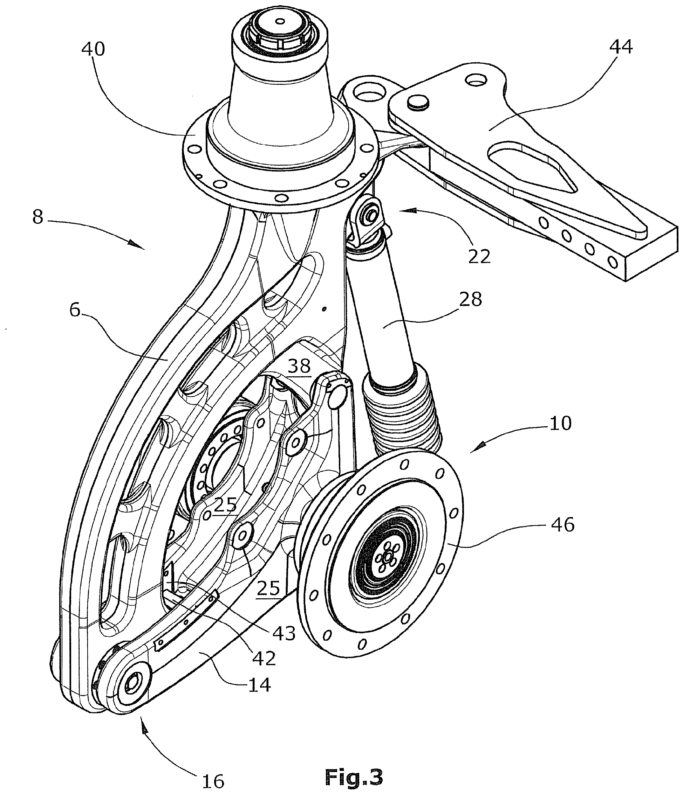

Fig. 3 zeigt die Radaufhängung 8 in einer Zusammenstellungszeichnung, in der auch die auf den Radachsen 12 drehbar gelagerten Anschlussflansche 46 für die Räder der Walzräderpaare 2 dargestellt sind.

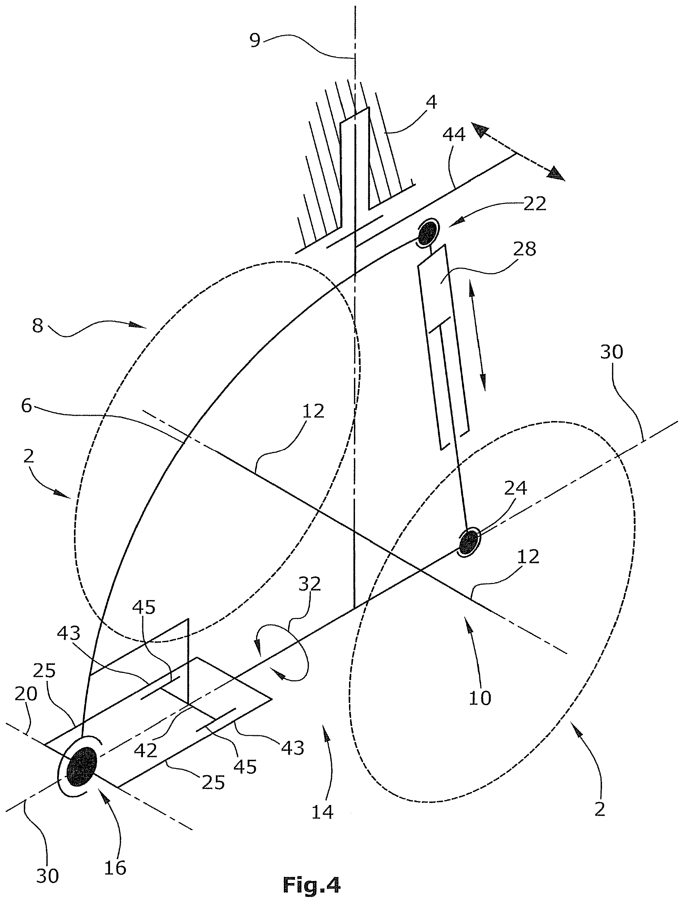

Fig. 4 zeigt eine schematische kinematische Struktur der Radaufhängung 8.

Hierzu kann die Pendelachse 30 einerseits in dem Lenkarm 6 gelagert sein und andererseits in dem die Schwinge 14 mit der Hubeinrichtung 28 koppelnden Gelenk 24, das ebenfalls kardanisch ausgeführt sein kann.

## Patentansprüche

1. Bodenverdichtungsgerät, insbesondere Gummiradwalze (1), mit mehreren Walzräderpaaren (2), mit einem Maschinenrahmen (4), in dem für jedes Walzräderpaar (2) eine Radaufhängung (8) mit einem um eine Lenkachse (9) schwenkbaren Lenkarm (6), mit einem Radträger (10) und einer Hubeinrichtung (28) für den Radträger (10) gelagert ist, wobei der Radträger (10) mit einer um eine Schwenkachse (20) schwenkbaren Schwinge (14) auf- und abbewegbar ist, die an einem Ende gelenkig an dem Lenkarm (6) gelagert ist und an dem freien Ende über die Hubeinrichtung (28) zur Höheneinstellung des Radträgers (10) mit dem Lenkarm (6) verbunden ist, wobei der Radträger (10) eine Pendelbewegung (32) um eine parallel zu der Schwinge (14) verlaufende Pendelachse (30) ausführen kann,
**dadurch gekennzeichnet, dass**
der Radträger (10) in die Schwinge (14) integriert ist und das Walzräderpaar (2) in der Schwinge (14) gelagert ist, wobei die Schwinge (14) kardanisch oder sphärisch in dem Lenkarm (6) der Radaufhängung (8) gelagert ist, so dass die Schwinge (14) sowohl um die Schwenkachse (20) als auch um die Pendelachse (30) schwenkbar ist.

2. Bodenverdichtungsgerät nach Anspruch 1, **dadurch gekennzeichnet, dass** die Schwinge (14) Anschlagflächen (34, 36) aufweist, die zur Begrenzung der auf den Radträger (10) einwirkenden Pendelbewegung (32) gegen den Lenkarm (6) anschlagen.

3. Bodenverdichtungsgerät nach Anspruch 1 oder 2, **dadurch gekennzeichnet, dass** zur Anlage der Anschlagflächen (34, 36) gegen den Lenkarm (6) ein Steg (38) von dem Lenkarm (6) absteht oder dass ein Steg von der Schwinge (14) absteht, der in eine Nut des Lenkarms (6) eingreift.

4. Bodenverdichtungsgerät nach Anspruch 1 bis 3, **dadurch gekennzeichnet, dass** mehrere Walzräderpaare (2) koordiniert gemeinsam lenkbar sind.

5. Bodenverdichtungsgerät nach Anspruch 1 bis 4, **dadurch gekennzeichnet, dass** die Radaufhängung (8) über einen Lenkhebel (44) mit einer Lenkeinrichtung gekoppelt ist, mit der mehrere Walzräderpaare (2) gemeinsam lenkbar sind.

6. Bodenverdichtungsgerät nach Anspruch 1 bis 5, **dadurch gekennzeichnet, dass** die Hubeinrichtung (28) der Radaufhängung (8) eine Kolbenzylindereinheit mit einer Zylinderkammer aufweist, die mit einer Zylinderkammer mindestens einer Hubeinrichtung (28) eines weiteren Walzräderpaares (2) verbunden ist.

7. Bodenverdichtungsgerät nach Anspruch 1 bis 6, **dadurch gekennzeichnet, dass** die Radaufhängung (8) und/oder der Radträger (10) aus Gussmaterial bestehen.

8. Bodenverdichtungsgerät nach einem der Ansprüche 1 bis 7, **dadurch gekennzeichnet, dass** mit Abstand von dem sphärischen oder kardanischen Gelenk (16) der Lenkarm (6) in einer orthogonal zu einer Lenkrichtung (11) und zur Lenkachse (9) verlaufenden Richtung kraftschlüssig mit der Schwinge (14) gekoppelt ist.

9. Bodenverdichtungsgerät nach Anspruch 1 bis 8, **dadurch gekennzeichnet, dass** in der Nähe des kardanischen oder sphärischen Gelenkes (16) zwischen Lenkarm (6) und Schwinge (14) ein eine Schwenkbewegung der Schwinge (14) in Höhenrichtung zulassender Vorsprung (42) an dem Lenkarm (6) befestigt ist, der die Lenkkräfte des Lenkarms (6) auf die Schwinge (14) überträgt.

10. Bodenverdichtungsgerät nach Anspruch 9, **dadurch gekennzeichnet, dass** der Vorsprung (42) gelenkig an dem Lenkarm (6) befestigt ist und der Pendelbewegung (32) der Schwinge (14) folgt.

11. Bodenverdichtungsgerät nach Anspruch 9 oder 10, **dadurch gekennzeichnet, dass** der Vorsprung (42) seitliche Flanken (45) aufweist, die an Gleitflächen (43) der Schwinge (14) anliegen, wobei bei einer Änderung der Höheneinstellung die Schwinge (14) mit den Gleitflächen (43) relativ zu dem Vorsprung (42) auf- und abbewegbar ist.

## Claims

1. A ground compaction machine, particularly a pneumatic-tyred roller (1), with a plurality of roller wheel pairs (2), with a machine frame (4) in which, for each roller wheel pair (2), a wheel suspension (8) with a steering arm (6) pivotable around a steering axis (9), with a wheel bearing (10), and with a lifting means (28) for the wheel bearing (10) is mounted, wherein the wheel bearing (10) can be moved up and down by means of a swing arm (14) pivotable around a pivot axis (20), and the swing arm (14) which is mounted in an articulated manner at one end on the steering arm (6), and is connected at the free end to the steering arm (6) by means of the lifting means (28) for height adjustment of the wheel bearing (10), wherein the wheel bearing (10) can perform an oscillating movement (32) around an oscillating axis (30) arranged parallel to the swing arm (14),
**characterized in that**
the wheel bearing (10) is integrated into the swing arm (14), and the roller wheel pair (2) is mounted in the swing arm (14), wherein the swing arm (14) is gimbal-mounted or spherically mounted in the steering arm (6) of the wheel suspension (8), so that the swing arm (14) is pivotable around the pivot axis (20) and around the oscillating axis (30).

2. Ground compaction machine according to claim 1, **characterized in that** the swing arm (14) comprises stop faces (34, 36) which abut against the steering arm (6) to limit the oscillating movement (32) acting on the wheel bearing (10).

3. Ground compaction machine according to claim 1 or 2, **characterized in that**, for abutting the stop surfaces (34, 36) against the steering arm (6), a bar (38) protrudes from the steering arm (6), or a bar engaging in a groove of the steering arm (6) protrudes from the swing arm (14).

4. Ground compaction machine according to claim 1 to 3, **characterized in that** a plurality of roller wheel pairs (2) can be steered jointly in a coordinated manner.

5. Ground compaction machine according to claim 1 to 4, **characterized in that** the wheel suspension (8) is coupled by means of a steering lever (44) with a steering means with which a plurality of roller wheel pairs (2) can be steered jointly.

6. Ground compaction machine according to claim 1 to 5, **characterized in that** the lifting means (28) of the wheel suspension (8) comprises a piston cylinder unit with a cylinder chamber which is connected to a cylinder chamber of at least one lifting means (28) of a further roller wheel pair (2).

7. Ground compaction machine according to claim 1 to 6, **characterized in that** the wheel suspension (8) and/or the wheel bearing (10) consist of cast material.

8. Ground compaction machine according to claim 1 to 7, **characterized in that**, at a distance from the spherical or gimbal joint (16), the steering arm (6) is coupled in a force-locking manner with the swing arm (14) in a direction extending orthogonally to a steering direction (11) and to the steering axis (9).

9. Ground compaction machine according to claim 1 to 8, **characterized in that**, in proximity to the gimbal or spherical joint (16) between the steering arm (6) and the swing arm (14), a protrusion (42) allowing for a pivoting movement of the swing arm (14) in height direction is mounted on the steering arm (6) and transfers the steering forces of the steering arm (6) to the swing arm (14).

10. Ground compaction machine according to claim 9, **characterized in that** the protrusion (42) is mounted on the steering arm (6) and follows the oscillating movement (32) of the pivot arm (14).

11. Ground compaction machine according to claim 9 or 10, **characterized in that** the protrusion (42) comprises lateral flanks (45) abutting on the sliding surfaces of the pivot arm (14), wherein in case of a height adjustment the pivot arm (14) can be moved up and down with the sliding surfaces (43) relative to the protrusion (42).

## Revendications

1. Engin de compactage du sol, en particulier compacteur à pneus (1), avec plusieurs paires de roues de compactage (2), avec un châssis de machine (4) dans lequel est supportée, pour chaque paire de roues de compactage (2), une suspension de roue (8) avec un bras de direction (6) pouvant pivoter autour d'un axe directeur (9), avec un support de roue (10) et un système de levage (28) pour le support de roue (10), le support de roue (10) pouvant être déplacé vers le haut et vers le bas avec un bras oscillant (14) qui pivote autour d'un axe de pivotement (20), qui est supporté à une extrémité de façon articulée sur le bras de direction (6) et qui, à l'extrémité libre, est raccordé au bras de direction (6) par le biais du système de levage (28) destiné au réglage en hauteur du support de roue (10), le support de roue (10) pouvant effectuer un mouvement pendulaire (32) autour d'un axe pendulaire (30) parallèle au bras oscillant (14),
**caractérisé en ce que**
le support de roue (10) est intégré dans le bras oscillant (14), et la paire de roues de compactage (2) est supportée dans le bras oscillant (14), le bras oscillant (14) étant supporté à cardan ou par rotule dans le bras de direction (6) de la suspension de roue (8) de telle sorte que le bras oscillant (14) peut pivoter aussi bien autour de l'axe de pivotement (20) qu'autour de l'axe pendulaire (30).

2. Engin de compactage du sol selon la revendication 1, **caractérisé en ce que** le bras oscillant (14) comporte des surfaces de butée (34, 36) qui butent contre le bras de direction (6) pour la limitation du mouvement pendulaire (32) agissant sur le support de roue (10).

3. Engin de compactage du sol selon la revendication 1 ou 2, **caractérisé en ce que**, pour l'appui des surfaces de butée (34, 36) contre le bras de direction (6), une traverse (38) dépasse du bras de direction (6), ou **en ce qu'**une traverse dépasse du bras oscillant (14) et engrène dans une rainure du bras de direction (6).

4. Engin de compactage du sol selon les revendications 1 à 3, **caractérisé en ce que** plusieurs paires de roues de compactage (2) peuvent être dirigées conjointement de façon coordonnée.

5. Engin de compactage du sol selon les revendications 1 à 4, **caractérisé en ce que** la suspension de roue (8) est, par le biais d'un levier de direction (44), couplée à un système de direction avec lequel plusieurs paires de roues de compactage (2) peuvent être dirigées conjointement.

6. Engin de compactage du sol selon les revendications 1 à 5, **caractérisé en ce que** le système de levage (28) de la suspension de roue (8) comporte une unité de cylindre à piston avec une chambre de cylindre qui est raccordée à une chambre de cylindre d'au moins un système de levage (28) d'une autre paire de roues de compactage (2).

7. Engin de compactage du sol selon les revendications 1 à 6, **caractérisé en ce que** la suspension de roue (8) et/ou le support de roue (10) sont composés d'un matériau de coulée.

8. Engin de compactage du sol selon l'une des revendications 1 à 7, **caractérisé en ce que**, à distance de l'articulation (16) à rotule ou à cardan, le bras de direction (6) est couplé par liaison de force au bras oscillant (14) dans une direction à angle droit par rapport à un sens de direction (11) et à l'axe directeur (9) .

9. Engin de compactage du sol selon les revendications 1 à 8, **caractérisé en ce que**, à proximité de l'articulation (16) à rotule ou à cardan, entre le bras de direction (6) et le bras oscillant (14), une saillie (42) permettant un mouvement pivotant du bras oscillant (14) dans le sens de la hauteur est fixée sur le bras de direction (6) et transmet les forces de direction du bras de direction (6) au bras oscillant (14).

10. Engin de compactage du sol selon la revendication 9, **caractérisé en ce que** la saillie (42) est fixée de façon articulée sur le bras de direction (6) et suit le mouvement pendulaire (32) du bras oscillant (14).

11. Engin de compactage du sol selon la revendication 9 ou 10, **caractérisé en ce que** la saillie (42) comporte des flancs (45) latéraux qui sont adjacents aux surfaces de glissement (43) du bras oscillant (14), le bras oscillant (14) avec les surfaces de glissement (43) pouvant se déplacer vers le haut et le bas relativement à la saillie (42) lors d'une modification du réglage en hauteur.
